# EUROPEAN PATENT SPECIFICATION

(11) **EP 2 147 607 B1**
(45) Date of publication and mention of the grant of the patent: **14.05.2014**
(21) Application number: 09425278.0
(22) Date of filing: 10.07.2009
(51) Int. Cl.: B29D 35/02, A43B 17/12, A43B 13/12, A43B 1/06, A43B 3/10, A43B 3/12

(54) **Improved structure for a shoe particularly for a clog**
Verbesserte Struktur für Schuhe, insbesondere für Holzschuhe
Structure améliorée pour chaussure, en particulier pour un sabot

(30) Priority: 21.07.2008 IT RM20080393
(43) Date of publication of application: 27.01.2010
(73) Proprietor: SSL Healthcare Italia S.p.A., 40132 Bologna (IT)
(72) Inventor: Checchi, Angelo , SSL Healthcare Italia S.p.A., 40132 Bologna (BO) (IT); Veneziani, Roberto, SSL Healthcare Italia S.p.A., 40132 Bologna (BO) (IT)
(74) Representative: Cawdell, Karen Teresa

(56) References cited:
- FR-A- 2 286 612
- FR-A- 2 482 428
- FR-A- 2 548 876
- GB-A- 1 182 040
- US-A- 4 742 625

## Description

The present invention relates to a process for realizing a shoe structure, and to a shoe structure obtained by said process.

More specifically, the invention relates to a structure of the above kind permitting realizing a shoe using, in combination EVA (Ethylene-Vinyl-Acetate) and a wooden plantar, without requiring the use of glue.

Obviously, the solution of the structure according to the invention, even if it is described in the following with reference to its implementation in a clog, can be applied to every king of shoe.

As it is well known, the use of shoes, aimed to a professional or free time use, mainly comprised of EVA, diffused in the recent years, in order to be able to exploit intrinsic features of this material.

However, these shoes cannot be realized with a high care to the bio-mechanical aspects of the same shoe.

Particularly, negative effects exist both of the bio-mechanical type, due to instability caused by the too high softness of EVA directly contacting the foot, and to an irregular "collapsing" of foamed EVA, and of the hygienic and comfort type.

In view of the above, the Applicant has realized a structure for a shoe permitting solving the above problems, suggesting a solution permitting realizing a very light shoe, since it is mainly comprised of EVA, and respecting the bio-mechanical, hygiene and comfort requisites, providing a plantar comprised of a natural material such as wood.

GB 1182040 describes a solution according to the precharacterising portion of claim 1 of the present patent application.

It is therefore specific object of the present invention an improved process for realising a structure for shoes according to independent claim 1.

Other features of the inventive process are included in dependent claims 2 - 4.

The invention relates also to a shoe obtained by the above process.

The present invention will be now described, for illustrative but not limitative purposes, according to its preferred embodiments, with particular reference to the figure of the enclosed drawings, wherein
figure 1 is a lateral view of a clog embodying the features according to the invention;
figure 2 is a plan view of the clog of figure 1;
figure 3 is a section view taken along line A-A of figure 1;
figure 4 is a section view taken along line B-B of figure 1;
figure 5 is a section view taken along line C-C of figure 1;
figure 6 is a section view taken along line D-D of figure 1;
figure 7 is a section view taken along line F-F of figure 1; and
figure 8 is a section view taken along line G-G of figure 1.

Observing the figures of the enclosed drawings, it is shown a clog embodying the structure according to the present invention and generically indicated by reference number 1.

Upper 2 and sole 3 of the clog 1 are comprised of EVA, while plantar 4 is comprised of natural material, particularly wood.

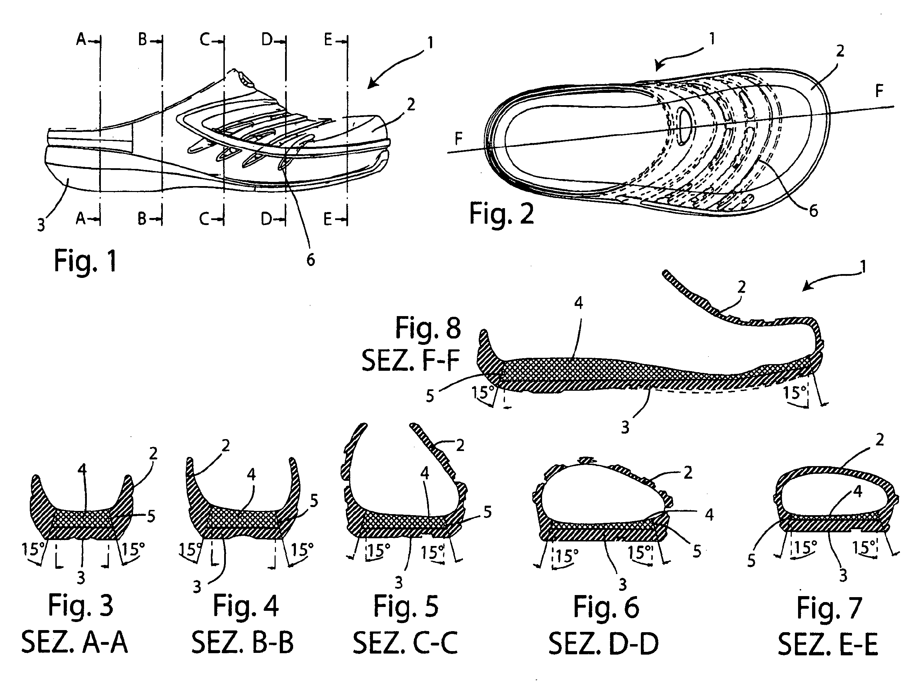

In order to obtain coupling between sole 3 and plantar 4, a seat 5 has been realised, the shape of which can be clearly observed from section figures 3-8, said seat permitting removably insertion of plantar 4.

By the solution according to the present invention, remarkable advantages are obtained with respect to a shoe completely comprised of EVA, mainly due to the fact that the foot is no more contacting a synthetic material (EVA), but it is contacting wood, so that it does not perspire and does not overheat, maintaining a healthy environment under the hygienic point of view, with a consequent reduced formation of microbes and bacteria.

Further, the particular seat 5 restraining plantar 4, permitting deambulation and removal of the same without the need of glue and/or any other material suitable to fix it to the EVA structure, besides permitting removal and re-introduction of plantar 4, also in view of lack of chemical components, confers to the solution salutary features.

Wood plantar 4 is stable and adhering to the clog 1, thanks to the particular flaring realised on the perimeter of the same.

A convex flaring is provided on the plantar 4, matching with the concave complementary relative angle of the EVA injection mould, which is "undercut" realised.

Insertion of wood plantar 4 into clog 1 occurs immediately after moulding of EVA, so as to exploit the larger volume of the same when it is still hot.

Thus, foamed EVA, while cooling, reduces its volume and thus "restraints" plantar 4 within its seat.

Thus, wood plantar is stably coupled, and it can follow the EVA deformations while the user walks thanks to the provision of a flexion area (flex point) making plantar flexible in correspondence of the metatarsal area.

Finally, aeration windows 6 are provided in Upper 2 of the clog according to the invention, in order to obtain the maximum transpiration and aeration.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Process for realizing a structure for shoes, particularly for clogs, comprising the steps of:
• molding an upper and sole structure by injection of foamed EVA (ethylene vinyl acetate), said structure having a seat;
• inserting a plantar made up of natural material, within said seat;
• letting foamed EVA cooling, so that its shrinking blocks the plantar within the same;
**characterized in that** the seat has a flaring perimeter, and **in that** the step of inserting a plantar within said seat occurs immediately after the previous step of molding EVA and before cooling of same EVA.

2. Process for realizing a structure for shoes, according to claim 1, **characterized in that** the natural material of said plantar is wood.

3. Process for realizing a structure for shoes, according to any of claims 1 or 2, **characterized in that** said plantar has a shape complementary to the shape of said seat.

4. Process for realizing a structure for shoes, according to any of claims 1-3, **characterized in that** said upper structure provides aeration slots.

5. Improved structure for shoes, realized according to the process of any of claims 1-4.

## Patentansprüche

1. Verfahren zum Erzielen einer Konstruktion für Schuhe, insbesondere für Jabots, umfassend die Schritte des:
• Formens einer Ober- und Sohlenkonstruktion durch Injektion von geschäumtem EVA (Ethylenvinylacetat), wobei die Konstruktion einen Fersensitz aufweist;
• Einlegens einer Sohle, die aus Naturmaterial besteht, innerhalb des Fersensitzes;
• Abkühlenlassens des geschäumten EVA, so dass sein Schrumpfen den Fersensitz darin abriegelt;
**dadurch gekennzeichnet, dass** der Fersensitz einen Rand aufweist, der nach oben gedreht ist, und dass der Schritt des Einlegens einer Sohle innerhalb des Fersensitzes sofort nach dem vorhergehenden Schritt des Formens des EVA und vor dem Abkühlen desselben EVA erfolgt.

2. Verfahren zum Erzielen einer Konstruktion für Schuhe nach Anspruch 1, **dadurch gekennzeichnet, dass** das Naturmaterial der Sohle Holz ist.

3. Verfahren zum Erzielen einer Konstruktion für Schuhe nach einem der Ansprüche 1 oder 2, **dadurch gekennzeichnet, dass** die Sohle eine zur Gestalt des Fersensitzes komplementäre Gestalt aufweist.

4. Verfahren zum Erzielen einer Konstruktion für Schuhe nach einem der Ansprüche 1 - 3, **dadurch gekennzeichnet, dass** die Oberkonstruktion Belüftungsschlitze bereitstellt.

5. Verbesserte Konstruktion für Schuhe, dem Verfahren nach den Ansprüchen 1 - 4 gemäß erzielt.

## Revendications

1. Procédé pour réaliser une structure pour chaussures, en particulier pour sabots, comprenant les étapes suivantes :
- mouler une structure de tige et de semelle par injection d'EVA moussé (éthylène-vinyle-acétate), ladite structure ayant un siège ;
- insérer un lit plantaire constitué de matériau naturel, à l'intérieur dudit siège ;
- laisser refroidir l'EVA moussé afin que son retrait bloque le lit plantaire à l'intérieur de celui-ci ;
**caractérisé en ce que** le siège a un périmètre évasé et **en ce que** l'étape d'insertion d'un lit plantaire à l'intérieur dudit siège se produit immédiatement après l'étape précédente de moulage d'EVA et avant le refroidissement dudit EVA.

2. Procédé pour réaliser une structure pour chaussures selon la revendication 1, **caractérisé en ce que** le matériau naturel dudit lit plantaire est du bois.

3. Procédé pour réaliser une structure pour chaussures selon l'une quelconque des revendications 1 ou 2, **caractérisé en ce que** ledit lit plantaire a une forme complémentaire à la forme dudit siège.

4. Procédé pour réaliser une structure pour chaussures selon l'une quelconque des revendications 1 à 3, **caractérisé en ce que** ladite structure de tige fournit des fentes d'aération.

5. Structure améliorée pour chaussures, réalisée selon le procédé selon l'une quelconque des revendications 1 à 4.
